# EUROPEAN PATENT APPLICATION

(11) **EP 4 818 679 A1**
(43) Date of publication of application: **07.10.2026**
(21) Application number: 24897296.0
(22) Date of filing: 13.11.2024
(51) Int. Cl.: G01N 21/84

(54) **ILLUMINATION DEVICE FOR INSPECTION, ILLUMINATION OPTICAL SYSTEM, AND INSPECTION SYSTEM**

(30) Priority: 02.12.2023 JP 2023204295
(71) Applicant: Machine Vision Lighting Inc., Kokubunji-shi, Tokyo, 185-0012 (JP)
(72) Inventor: MASUMURA, Shigeki, Kokubunji-shi Tokyo 185-0014 (JP)
(74) Representative: Ungria López, Javier
(86) International application number: PCT/JP2024/040272
(87) International publication number: WO 2025/115609

(57) **Abstract**

Object light returned from an object to be inspected that has been irradiated with light contains direct light and scattered light at a certain ratio. The object light returned from a glossy surface or a metal surface is centered on direct light, and unless a certain solid angle element is uniformly set according to a relative relationship between an irradiation solid angle and an observation solid angle, various variations in optical properties of the object to be inspected cannot be quantitatively captured. In order to capture a slight variation in surface shape, both the irradiation solid angle and the observation solid angle need to be made small. However, in such a case, there is a problem in that, when the normal of an inspection surface deviates even slightly from the observation optical axis, the object light itself can no longer be captured.

**Solution**

In response to this, in order to enable the present invention to capture object light up to a certain inclination of the inspection surface while keeping a detection sensitivity for the inclination constant, even when the irradiation solid angle and the observation solid angle are set small, first, by an illumination optical system in which the solid angle element is constant, a plurality of annular solid angle regions which are not mutually adjacent are formed concentrically within the irradiation solid angle. Thereby, even when the object to be inspected is a curved surface, the inclination thereof is converted into brightness information with the same sensitivity, and by obtaining the brightness information as a differential image of that surface, minute irregularities can be detected with a uniform detection sensitivity isotropically and without direction dependence up to a certain inclination of the object to be inspected. Further, a minute variation in optical properties of the object to be inspected is quantitatively converted into brightness information, and the minute variation can be easily detected by a single image captured by an ordinary camera and lens.

## Description

### TECHNICAL FIELD

The present invention relates to an inspection lighting device, a lighting optical system, and an inspection system used for irradiating an object to be inspected with inspection light and for inspecting the appearance, scratches, defects, and the like of a product.

### BACKGROUND ART

As an example of an inspection lighting device used for an appearance inspection of a product or the like, there is a coaxial illumination disclosed in Patent Document 1, in which an imaging direction is made coincident with a direction of illuminating an object to be inspected. This coaxial illumination is provided with: a light source that emits inspection light in a direction parallel to an inspection target surface of said object to be inspected; and a half mirror that is disposed in an inclined manner between said object to be inspected and an imaging device provided above said object to be inspected, said half mirror being arranged to reflect said inspection light toward said object to be inspected and to transmit reflection light from said object to be inspected toward the imaging device.

The coaxial illumination has effects of: being able to make an irradiation direction of irradiation light and an observation direction of object light returned from the object to be inspected substantially coincident with each other with respect to the object to be inspected; being able to set irradiation conditions and observation conditions substantially uniformly with respect to respective points of the object to be inspected; and facilitating capturing of variations in optical properties at the respective points of the object to be inspected as variations in the object light radiated from the respective points of the object to be inspected. Nevertheless, in order to detect and capture variations in optical properties caused by minute defects in the object to be inspected, it is necessary to set the irradiation conditions and the observation conditions at the respective points more uniformly, and therefore contrivances according to Patent Documents 1, 2, 3, and 4 have been made.

Incidentally, in recent years, there has been a demand for enabling characteristic points such as defects, which are difficult to detect even using the inspection lighting device as described above, to be detected from a captured image. More specifically, in addition to the case in which the surface property of a product as the object to be inspected is a perfectly matte surface that returns, as the object light, scattered light exhibiting substantially the same brightness regardless of the observation direction, there are characteristic points on an inspection target surface, such as a glossy surface or a metal surface, that return direct light, such as specular reflection light or direct transmission light, whose brightness differs greatly depending on the irradiation direction of the inspection light and the observation direction of the object light. At such characteristic points, in order to obtain desired brightness information, it is difficult to precisely control the irradiation optical axis of the inspection light, the shape of the irradiation solid angle, and the like, and even if the inspection light can be irradiated, the observation direction of the object light varies depending on at which position on the object to be inspected the characteristic point exists, and as a result, the difference in brightness varies greatly, so that it may be difficult to discriminate the characteristic points.

More specifically, even if a reflection direction of the irradiated inspection light slightly varies due to a minute defect or the like on the object to be inspected, when such variation falls within an observation solid angle of the imaging device, no variation in brightness occurs in the captured image regardless of presence or absence of the defect. Alternatively, if the irradiation solid angle of the inspection light is large and an inclination of its optical axis differs at respective points of the object to be inspected, not only can a slight variation in the reflection direction not be captured as a variation in light quantity within the observation solid angle of the imaging device, but the variation in light quantity within the observation solid angle of the imaging device also becomes inconsistent among the respective points of the object to be inspected, so that, as machine vision, such minute defects or the like cannot be accurately captured within an inspection target range.

### CITATION LIST

### Patent Literature

[Patent Document 1] Japanese Patent No. 5866573
[Patent Document 2] Japanese Patent No. 5866586
[Patent Document 3] Japanese Patent No. 6451821
[Patent Document 4] Japanese Patent No. 7206020

### SUMMARY OF INVENTION

### Technical Problem

The present invention has been made in view of the above-described problems, and an object thereof is to provide an inspection lighting device, a lighting optical system, and an inspection system that can change a light quantity within an observation solid angle of an imaging device by a certain amount at respective points of an imaging range of the object to be inspected regardless of where the characteristic point is located within a field of view, even when characteristic points such as defects are very small or faint and variations in reflection or scattering occurring at the characteristic points are slight, and that can thereby detect details of such minute characteristic points.

Even when characteristic points such as defects are very small or faint and variations in reflection or scattering occurring at the characteristic points are slight, and regardless of where the characteristic point is located within a field of view at respective points of an imaging range of the object to be inspected, when, for example, the irradiation solid angle of the irradiation light for the respective points of the object to be inspected and the observation solid angle formed by the imaging device that observes the object light returned from the object to be inspected are in directions of specular reflection with respect to each other, the characteristic points can be detected as a difference in luminance of the object light by way of: a variation in radiation energy of the object light itself, such as reflection or scattering returned from the object reflecting the irradiation solid angle, caused by a variation in optical properties such as the reflection direction at the characteristic points; or a variation in a relative relationship between a solid angle of the object light and the observation solid angle, resulting in a variation in light energy of the object light captured within the observation solid angle. However, the amount of variation in luminance of the object light is greatly influenced by the amount of variation in a relative relationship, such as the respective sizes and the relative angles, of the solid angle of the object light reflecting the solid angle of the irradiation light and the observation solid angle that captures the object light.

More specifically, there is a problem in that: in a state in which either one of the solid angle of the object light and the observation solid angle is completely included in the other, no variation in luminance arises from a variation in the relative relationship between the two solid angles; or, in a case in which the solid angle of the object light and the observation solid angle have no portion mutually included in each other, the brightness of the object light cannot be detected by the observation solid angle; or, in a case in which the solid angle of the object light and the observation solid angle are large, a variation in the brightness of the object light with respect to a variation in the solid angle of the object light becomes relatively small, so that it becomes difficult to detect the characteristic points.

In particular, in a case in which the object to be inspected is constituted by a curved surface, the relative relationship, such as the respective sizes and the relative angles, of the solid angle of the object light reflecting the solid angle of the irradiation light and the observation solid angle capturing the object light varies depending on the position of the characteristic point on the curved surface, and even for the same characteristic point, the amount of variation in the brightness of the object light becomes large or small. Furthermore, when a variation in inclination of the solid angle of the object light caused by the characteristic point is small, it is necessary to set both the irradiation solid angle and the observation solid angle small so that the variation in inclination of the solid angle of the object light results in a greater variation in brightness. However, in this case, there is a problem in that, when the surface of the object to be inspected is inclined by an angle equal to or greater than 1/2 of a sum of the plane half-angles of the irradiation solid angle and the observation solid angle, the object light originating from reflection can no longer be captured within said observation solid angle, and a variation in the solid angle of the object light caused by a characteristic point within that surface also cannot be detected.

As described above, an object of the present invention is to solve the problem in which an amount of variation in the relative relationship between the solid angle of the object light reflecting the irradiation solid angle and the observation solid angle of the imaging device causes, depending on the inclination of the surface of the object to be inspected, the variation in brightness of the object light due to a variation in light energy captured by the observation solid angle to become small, or makes it impossible to capture the variation in brightness, and thereby to provide an inspection lighting device, a lighting optical system, and an inspection system that enable detection of details of such minute characteristic points.

### Solution to Problem

The present invention has been made based on a novel idea of: making aspects such as a size, a shape, and an inclination of the irradiation solid angle of the inspection light emitted from the inspection lighting device and the lighting optical system uniform with respect to respective points of the object to be inspected; and irradiating the inspection light in such a manner that variation elements other than a propagation direction of light within said irradiation solid angle, for example, different wavelengths, polarization planes, or light quantities, are arbitrarily classified, and further such irradiation being adjustable; whereby, even when defects or the like in the object to be inspected are minute and an amount of variation in reflection or scattering caused by said defects or the like is extremely slight, the variations can be captured as a respective variation in light quantity for each of the classified, different regions of wavelength bands, polarization planes, or light quantities within the observation solid angle formed by the imaging device, and an image with said variations as brightness information can be obtained.

More specifically, the inspection lighting device and the lighting optical system of the present invention are an inspection lighting device and a lighting optical system for irradiating the object to be inspected with inspection light, and are applied to an inspection system comprising an observation optical system that captures light reflected, transmitted, or scattered at said object to be inspected. In said inspection lighting device and said lighting optical system, there are provided: a surface light source that emits the inspection light; a lens disposed between said surface light source and said object to be inspected, for forming an irradiation solid angle for the object to be inspected, in the inspection light emitted from said surface light source to irradiate said object to be inspected; and a first light-shielding mask disposed between said surface light source and said lens, on a front side or a rear side of a focal position of said lens, said first light-shielding mask shielding light to form an irradiation solid angle of the inspection light irradiated to respective points of said object to be inspected and forming a plurality of annular solid angle regions disposed concentrically within said irradiation solid angle and having no mutually adjacent portions. Said inspection lighting device and said lighting optical system are capable of simultaneously forming the same irradiation solid angle for respective points of said object to be inspected, regardless of a distance from the inspection lighting device and the lighting optical system to the object to be inspected and positions of respective points of said object to be inspected, and said irradiation solid angle can be set to simultaneously have the same relative angle with respect to an observation solid angle formed at the respective points of said object to be inspected when said imaging device captures light from said object to be inspected through said observation optical system.

Further, the inspection lighting device and the lighting optical system of the present invention may further comprise, adjacent to said first light-shielding mask, a first filter capable of dividing the inspection light into arbitrary solid angle regions having partially different optical attributes by light of different wavelength bands, light of different polarization planes, or light of different light quantities, or capable of setting said optical attributes to vary continuously. Further, said first light-shielding mask and said first filter may be a third filter unified as a means for forming the solid angle regions and the irradiation solid angle, having at least one of functions of said first light-shielding mask and said first filter.

Further, between said first light-shielding mask and said surface light source, in a vicinity at which said lens forms an image on the object to be inspected, at least one of a second light-shielding mask and a fourth filter that transmits only light having a specific attribute may be further provided, and an irradiation area or an irradiation pattern of the inspection light with respect to said object to be inspected may be arbitrarily generated by said second light-shielding mask or said fourth filter. The second light-shielding mask and the fourth filter that transmits only light having a specific attribute may be a fifth filter having at least one of functions of the second light-shielding mask and the fourth filter.

Further, the first light-shielding mask, the first filter, and the third filter may be disposed between the surface light source and a relay optical system (for example, a tandem-arranged lens), and a relay image formed by said relay optical system may be used in place of the first light-shielding mask, the first filter, and the third filter. Said relay image is a reduced image of the first light-shielding mask, the first filter, and the third filter. Note that positions of the first light-shielding mask, the first filter, and the third filter may also be variable along an irradiation optical path (that is, a configuration in which the relay image of the first light-shielding mask, the first filter, and the third filter is arrangeable in a vicinity of the focal position of said lens). Further, the light-shielding mask may be a means that completely shields light, may have a constant low transmittance, or may have an optical attribute that does not transmit light or whose transmittance is lower than a certain level by a sixth filter on the imaging device side. The first light-shielding mask, the first filter, and the third filter are of a transmission type, but may be of a reflection type.

Incidentally, the brightness at respective points of said object to be inspected is determined by light energy captured within said observation solid angle formed at the respective points, and the amount of this light energy is determined by light energy contained in an inclusive portion between said observation solid angle and a solid angle formed by light reflected, transmitted, or scattered from the respective points and generated by said irradiation solid angle with respect to the respective points. When the light returned from the respective points is direct light such as specular reflection light or direct transmission light, a solid angle of said direct light has the same shape and size as the irradiation solid angle, and when the light is scattered light, light energy determined by spectral illuminance in a vicinity of the respective points is uniformly radiated with respect to the entire observable solid angle.

When the light returned from respective points of the object to be inspected is scattered light, illuminance at the respective points is determined by an inclination of a surface in a vicinity of the respective points of the object to be inspected at a relative angle with the irradiation solid angle irradiated to the respective points; radiation energy with respect to the entire solid angle of the scattered light varies in proportion to said illuminance; and the radiation energy is captured by the observation solid angle so that the brightness at the respective points varies. Therefore, in order to detect a finer minute inclination in the vicinity of the respective points of the object to be inspected, it is necessary to set the irradiation solid angle small so that said minute inclination causes a greater variation in the illuminance.

When the light returned from respective points of the object to be inspected is direct light, an inclination of a solid angle of the direct light having the same shape as the irradiation solid angle varies depending on an inclination of a surface in a vicinity of the respective points of the object to be inspected, and as a result, when an inclusive relationship with the observation solid angle varies, the brightness at the respective points varies in conjunction with the inclination of the surface in the vicinity of the respective points. However, if the inclination of the surface in the vicinity of the respective points is small with respect to sizes of the irradiation solid angle and the observation solid angle, an amount of variation in the brightness becomes small. Therefore, in order to detect a finer minute inclination in the vicinity of the respective points of the object to be inspected, it is necessary to set the irradiation solid angle and the observation solid angle small so that said minute inclination causes a variation in a size of an inclusive portion between the solid angle of the direct light and a solid angle of the observation light.

Here, even when the irradiation solid angle is made small, when the light returned from respective points of the object to be inspected is scattered light, the light radiated from the respective points of the object to be inspected is uniformly radiated over the entire solid angle, so that even when the surface in the vicinity of the respective points is greatly inclined, a variation in illuminance can be detected as the brightness of the scattered light as long as the inclination is within a range in which the irradiation solid angle is formed. However, when the light returned from the respective points of the object to be inspected is direct light, the solid angle of said direct light also becomes small and an angular range within which the light energy can be captured by the observation solid angle becomes small, and when the inclination of the surface in the vicinity of the respective points becomes larger than the range that can be captured by the observation solid angle, the light energy of the direct light cannot be captured, so that sizes of the inclination of the surface in the vicinity of the respective points of the object to be inspected that can be observed are limited.

Therefore, with such an inspection lighting device and a lighting optical system, even when the inclination of the surface in the vicinity of the respective points of the object to be inspected is minute, by appropriately setting a variation in the inclusive relationship between the annular solid angle region and the observation solid angle, said minute inclination can be manifested as a variation in observation luminance at the respective points, while, even when the inclination of the surface in the vicinity of the respective points is large up to an angle determined by an outermost periphery of the irradiation solid angle, a variation in the minute inclination on said surface can be detected with the same detection sensitivity.

In other words, while holding a variation in the relative relationship between the annular solid angle region formed within the irradiation solid angle and the observation solid angle at the respective points of the object to be inspected, a minute variation in the inclination from said inclination can be detected even when the inclination of the surface in the vicinity of the respective points of the object to be inspected is large up to a range of inclination determined by the outermost periphery of the irradiation solid angle. In particular, when the object to be inspected is a curved surface, whereas a detection range has heretofore been limited when detecting a minute variation in inclination, a detection range that can be imaged at one time can be made larger.

Further, even when an intensity or a direction of reflection light, transmission light, or scattered light slightly varies due to minute defects or the like in said object to be inspected, the shape and angle of the irradiation solid angle of the inspection light irradiated to respective points of said object to be inspected can be appropriately set, by said first light-shielding mask or said first filter, in a relative relationship with the size, shape, and angle of the observation solid angle of said imaging device so that a variation in light quantity is caused at said varying portion in each solid angle region having different optical attributes within the observation solid angle of said imaging device, and can be appropriately set in accordance with the surface property of the characteristic point on the subject surface, so that minute defects or the like can be made easy to detect, or conversely, can be made not to be detected.

Further, by being capable of forming irradiation solid angles in various aspects and by forming said solid angle regions having further different optical attributes within said irradiation solid angle, it is possible to: cause reflection light or transmission light at said object to be inspected not to enter the observation solid angle of said imaging device so that only scattered light is captured; or observe a variation in a propagation direction of said reflection light or said transmission light at said object to be inspected as brightness information at respective points of said object to be inspected through an inclusive relationship between said reflection light or said transmission light and said observation solid angle. Further, by providing said imaging device with a second filter capable of selectively capturing images of said solid angle regions having different optical attributes within said irradiation solid angle reflected in the solid angle of said reflection light or said transmission light, variations occurring at the characteristic points of said object to be inspected can be captured for each said arbitrary solid angle region, and the inspection light can be irradiated with an irradiation solid angle of an exact aspect corresponding to minute variations in light occurring at various objects to be inspected and various characteristic points to be detected.

As said second filter mentioned here, in said imaging device, for example, said reflection light or said transmission light at said object to be inspected may be selectively spectrally separated for each different optical attribute, and then respective light quantities may be captured by a light sensor, or the second filter may comprise a filter that selectively transmits, for each pixel of the light sensor, only light having different optical attributes.

According to the present invention, when the inspection light having a substantially uniform irradiation solid angle is irradiated to said object to be inspected, in order to capture even a very slight variation in a solid angle of said reflection light or said transmission light that occurs when a reflection direction or a transmission direction varies due to defects or the like, only the variation in the solid angle of said reflection light or said transmission light can be selectively captured by adjusting the relative relationship between an annular solid angle region formed concentrically within the irradiation solid angle of said inspection light and the observation solid angle of said imaging device with respect to a shape, an angle, and a size thereof so that a variation in light quantity within said observation solid angle becomes maximum with respect to said variation in the solid angle and minimum with respect to other variations. Further, by setting arbitrary said solid angle regions having different optical attributes within said irradiation solid angle, a variation in light quantity for each said solid angle region can be simultaneously observed, and it becomes possible to continuously capture variations in light corresponding to variations in light at various characteristic points of said object to be inspected. Therefore, although capturing such a very slight variation in light due to minute defects or the like has been difficult with a conventional lighting device in which the shape, angle, and size of the irradiation solid angle of the inspection light differ with respect to respective points on said inspection target surface, the lighting device according to the present invention is capable of capturing the variation.

In order to control the size of the irradiation solid angle of the inspection light irradiated to respective points of said object to be inspected to be substantially uniform and to adjust an inclination distribution of the irradiation solid angle with respect to an optical axis center, said first light-shielding mask and said first filter, or said third filter integrating functions of both of these, or a relay image of said first light-shielding mask and said first filter, or of said third filter integrating functions of both of these, may be disposed at a position on a front side or a rear side of the focal position of said lens. Hereinafter, representing the description by said first light-shielding mask, that is, by varying an opening portion of said first light-shielding mask, the irradiation solid angle at respective points of said object to be inspected can be set to a desired shape and size. Further, when said first light-shielding mask is disposed at the focal position of said lens, optical axes of the irradiation solid angle of said inspection light all become parallel to an optical axis of said inspection light; when disposed on a lens side of the focal position of said lens, the irradiation solid angle of said inspection light can be inclined toward a direction in which said inspection light spreads; and when disposed on an outer side of the focal position of said lens, the irradiation solid angle of said inspection light can be inclined toward a direction in which said inspection light narrows. Thus, by varying an arrangement of said first light-shielding mask and the opening portion thereof, various adjustments are possible for the irradiation solid angle of said inspection light that directly affects the solid angle of the reflection light or transmission light from said object to be inspected, and the relative relationship between said object to be inspected and the observation solid angle of said imaging device that observes the reflection light, transmission light, or scattered light from said object to be inspected can be made into an aspect suitable for obtaining desired brightness information. That is, in this manner, even for an optical system in which the observation optical system used is not a telecentric optical system but the optical axis inclination of the observation solid angle varies between an outer side of a field-of-view and the optical axis center, it becomes possible to set the irradiation solid angle and the observation solid angle for the respective points to be in directions of specular reflection with respect to each other for the entire field of view.

Furthermore, said arbitrary solid angle region having different optical attributes set within said irradiation solid angle can be set as a further arbitrary solid angle region within said irradiation solid angle uniformly set with respect to said object to be inspected. Not only is the brightness at respective points of said object to be inspected determined merely by the relative relationship between the irradiation solid angle and the observation solid angle, but it also becomes possible to simultaneously observe further minute variations in light for each said solid angle region as variations in the relative relationship with respect to said observation solid angle, under substantially the same conditions at all points of a field-of-view of said object to be inspected, without separately resetting the relative relationship between said irradiation solid angle and said observation solid angle regarding the shapes, optical axes, and the like thereof.

In this manner, in the inspection system comprising the inspection lighting device according to the present invention and an imaging device that uses said inspection lighting device and captures images of light reflected, transmitted, or scattered at said object to be inspected, the reason that desired brightness information for minute characteristic points can be obtained is as follows. The brightness at respective points of said object to be inspected is determined by a light quantity, directed to said imaging device, of reflection light, transmission light, or scattered light from the respective points of said object to be inspected, and said light quantity is determined by an inclusive relationship between a solid angle of the reflection light, transmission light, or scattered light from the respective points of said object to be inspected and the observation solid angle of said imaging device. Therefore, by providing a function of substantially uniformly adjusting the irradiation solid angle of said inspection light that directly affects the reflection light or transmission light from the respective points of said object to be inspected, and further by classifying said irradiation solid angle into arbitrary solid angle regions having different wavelength bands, polarization planes, or light quantities, and further by forming a plurality of annular solid angle regions disposed concentrically within said irradiation solid angle and having no adjacent portions, said imaging device can selectively observe light quantities for each classified region, with respect to variations in optical properties including variations in a propagation manner of the object light returned from said object to be inspected, even on a surface where a normal of the surface of said object to be inspected does not coincide with the observation optical axis, with a uniform detection sensitivity that is the same as a detection sensitivity for a surface where the normal of the surface of said object to be inspected coincides with the observation optical axis.

In order to make the brightness information of said object to be inspected captured by said imaging device exhibit substantially uniform variations over an entire imaging range, the inclusive relationship between the observation solid angle formed at respective points of said object to be inspected by said imaging device and the solid angle of the reflection light, transmission light, or scattered light from the respective points of said object to be inspected must be kept substantially constant. This can be realized by moving said first light-shielding mask and said first filter, or said third filter, or a relay image of said first light-shielding mask and said first filter, or of said third filter, at a position on a front side or a rear side of the focal position of said lens, thereby making the irradiation solid angle of said inspection light and said solid angle region formed within said irradiation solid angle have a substantially uniform shape and size, and adjusting the inclination angle thereof to match the inclination of said observation solid angle at the respective points of said object to be inspected.

Further, in order to enable an irradiation area, an illumination shape, or an irradiation pattern to be arbitrarily generated while keeping the relative relationship of said irradiation solid angle of the inspection light with respect to said object to be inspected and said arbitrary solid angle region formed within said irradiation solid angle with said observation solid angle substantially constant for respective points of an illumination range, in addition to at least one of said first light-shielding mask or said first filter, or said third filter, at least one of said second light-shielding mask or said fourth filter, or said fifth filter having at least one of functions of said second light-shielding mask or said fourth filter, may be provided and disposed in a vicinity of a position at which an image is formed on said object to be inspected by said lens. In this manner, while keeping the shape, size, and inclination of said irradiation solid angle of said inspection light and said arbitrary solid angle region formed within said irradiation solid angle substantially uniform, both the irradiation area of said inspection light with respect to said object to be inspected and the optical attribute of said irradiation area, and said irradiation solid angle and said solid angle region having specific optical attributes for respective points of said object to be inspected, can be independently adjusted.

In order to enable easy inspection of also a three-dimensional shape and the like of said object to be inspected, in addition to said first light-shielding mask and said first filter, or said third filter, or a relay image thereof, said second light-shielding mask and said fourth filter in which a predetermined mask pattern is formed may be used, and this pattern may be imaged on said object to be inspected. In such a configuration, by means of the substantially uniform irradiation solid angle and the solid angle region having specific optical attributes adjusted by said first light-shielding mask and said first filter, brightness information having a uniform brightness variation can be obtained by said imaging device, and if there is a problem in the shape of said object to be inspected, distortion arises in the pattern obtained as the brightness information by said imaging device, whereby a shape defect can be easily detected.

When the solid angle of the reflection light or transmission light at respective points of said object to be inspected and the observation solid angle formed at the respective points of said object to be inspected by said imaging device are made substantially coincident with respect to the shape, size, and inclination thereof, even when there are minute characteristic points on said object to be inspected, a variation arises in the inclusive relationship between the solid angle of said reflection light or said transmission light and said observation solid angle, and a variation in the brightness information for said minute characteristic points can be obtained. A rate of variation in the brightness information caused by the variation in said inclusive relationship can be controlled by appropriately setting the sizes of the solid angle of said reflection light or said transmission light and said observation solid angle. However, in this state alone, only fixed brightness information depending on the sizes of both solid angles can be obtained. Therefore, when arbitrary solid angle regions having different wavelength bands, polarization planes, or light quantities are formed within the irradiation solid angle for the respective points of said object to be inspected, the regions are reflected as solid angle regions having different wavelength bands, polarization planes, or light quantities, respectively, within the solid angle of said reflection light or said transmission light at the respective points of said object to be inspected. Therefore, by configuring so that a variation in the brightness information for said characteristic points varies in accordance with an inclusive relationship between said solid angle regions reflected within the solid angle of said reflection light or said transmission light and said observation solid angle, minute amounts of variation corresponding to respective said solid angle regions can be detected simultaneously.

As an example for realizing this, the observation solid angle of said imaging device may be set in a direction line-symmetric with respect to a normal raised on said object to be inspected, with respect to an irradiation optical path of the irradiation solid angle that said inspection light forms with respect to said object to be inspected; and a reflection/transmission optical path of the solid angle formed by the reflection light or transmission light from respective points of said object to be inspected may be made substantially coincident with an observation optical path of the observation solid angle for the respective points of said object to be inspected of said imaging device.

Further, as another example for realizing this, a beam splitter may be provided that either reflects said inspection light to change a direction of the irradiation optical path thereof and transmits the reflection light from said object to be inspected without changing the direction of the reflection optical path so as to enable imaging by said imaging device as an observation optical path inputted to said observation optical system, or transmits said inspection light without changing the direction of the irradiation optical path thereof and reflects the reflection light from said object to be inspected to change the direction of the reflection optical path so as to enable imaging by said imaging device as an observation optical path inputted to said observation optical system. The irradiation solid angle of said inspection light for the respective points of said object to be inspected may be appropriately adjusted, and an optical axis of the observation solid angle of said imaging device for the respective points of said object to be inspected and an optical axis of the solid angle of said reflection light or said transmission light emitted from the respective points may be made substantially coincident, whereby this can be realized. Note that, with respect to the object to be inspected, this beam splitter may be installed to make the irradiation optical path and the reflection optical path, and the irradiation optical path and the observation optical path coincide and be coaxial, and to perform a function of separating the irradiation optical path and the observation optical path between said object to be inspected and said first light-shielding mask and said first filter, or said third filter, or a relay optical system for forming a relay image thereof.

Further, by providing said imaging device with a sixth filter capable of selectively imaging light of said solid angle regions having different wavelength bands, polarization planes, or light quantities, respectively, reflected within the solid angle of said reflection light or said transmission light, brightness variations caused by an inclusive relationship between respective said solid angle regions and said observation solid angle can be simultaneously detected.

### Advantageous Effects of Invention

As described above, according to the inspection lighting device and the lighting optical system of the present invention, by means of the annular solid angle regions disposed concentrically within the irradiation solid angle of the inspection light irradiated to respective points of the object to be inspected, while keeping a sensitivity for detecting the inclination in a vicinity of the respective points of said object to be inspected constant by brightness having a bright portion and a dark portion reflecting the inclination in the vicinity of the respective points of said object to be inspected and a halftone therebetween, the size and shape of solid angle regions having different wavelength bands, polarization planes, or light quantities formed within said irradiation solid angle can be freely adjusted. Therefore, the inclusive relationship between the solid angle of the reflection light, transmission light, or scattered light from the respective points of said object to be inspected and said solid angle regions reflected within said solid angle and having different wavelength bands, polarization planes, or light quantities, respectively, and the observation solid angle formed at the respective points of said object to be inspected by said imaging device can be uniformly set, so that even minute defects or the like that have heretofore been difficult to detect can be detected with the same detection sensitivity.

### Brief Description of Drawings

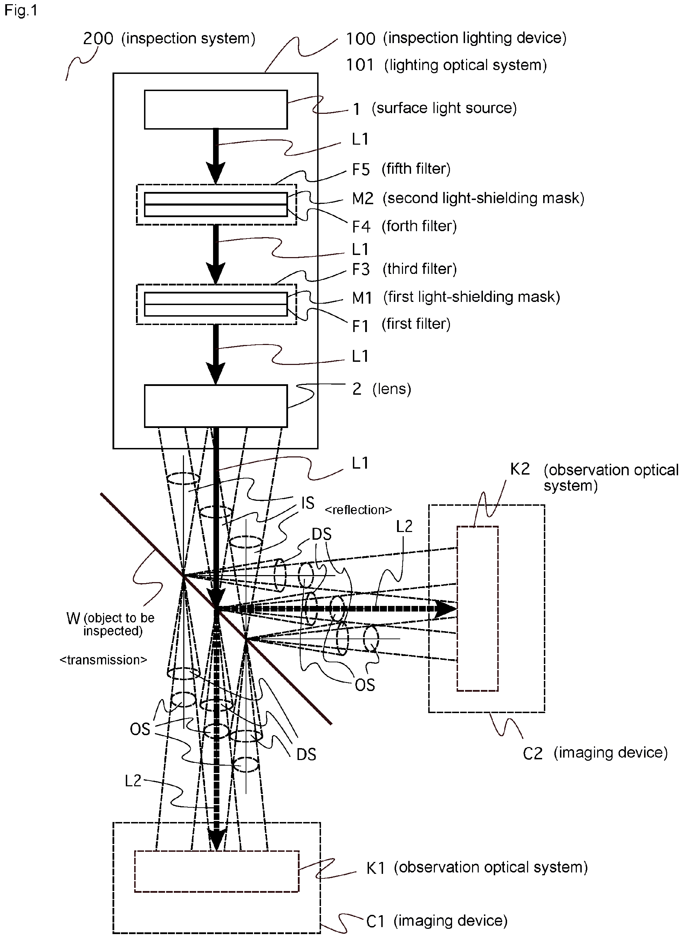

[Fig. 1] A schematic diagram showing components of an inspection lighting device, a lighting optical system, and an inspection system according to a first embodiment of the present invention, and a relationship between an irradiation optical path and an observation optical path, and among an irradiation solid angle, a solid angle of reflection/transmission light, and an observation solid angle.

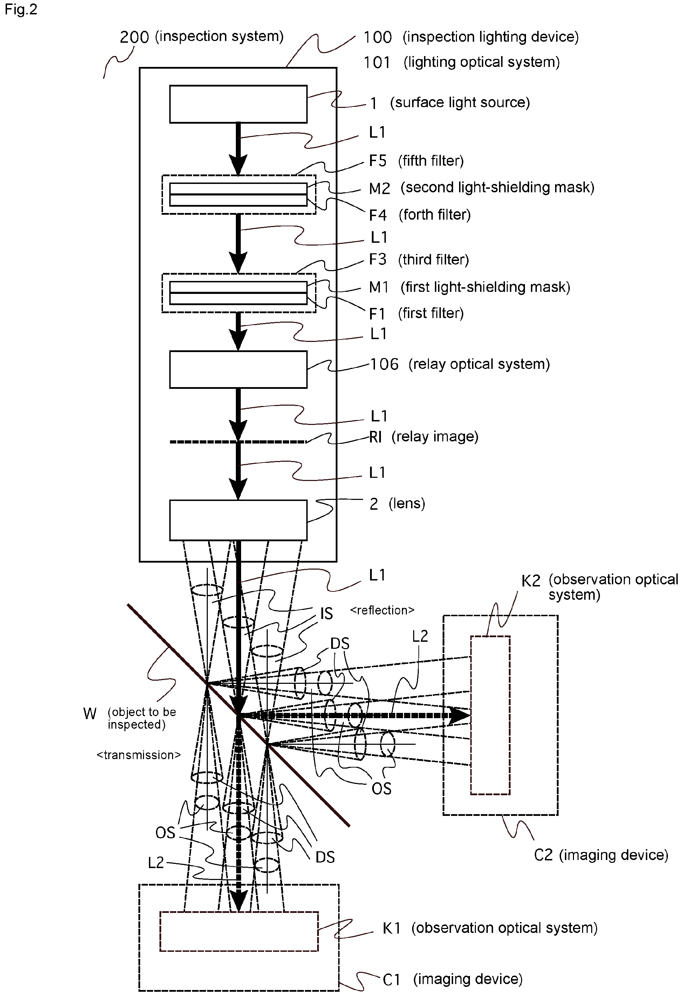

[Fig. 2] A schematic diagram showing components of an inspection lighting device, a lighting optical system, and an inspection system including a relay optical system according to a second embodiment of the present invention, and a relationship between an irradiation optical path and an observation optical path, and among an irradiation solid angle, a solid angle of reflection/transmission light, and an observation solid angle.

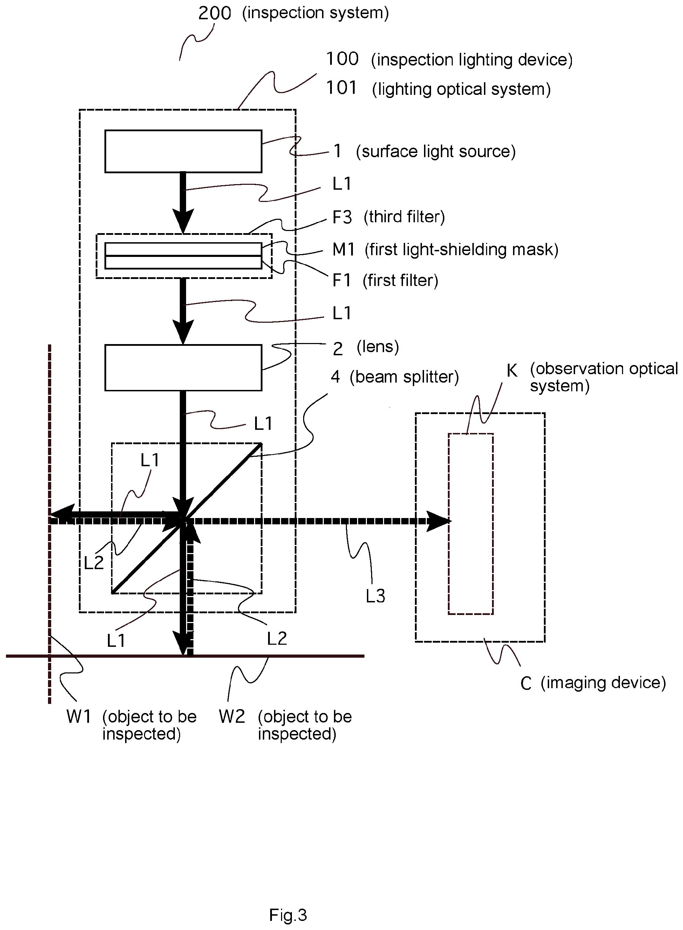

[Fig. 3] A schematic diagram showing components of an inspection lighting device, a lighting optical system, and an inspection system including a beam splitter according to a third embodiment of the present invention, and a relationship between an irradiation optical path and an observation optical path, and among an irradiation solid angle, a solid angle of reflection/transmission light, and an observation solid angle.

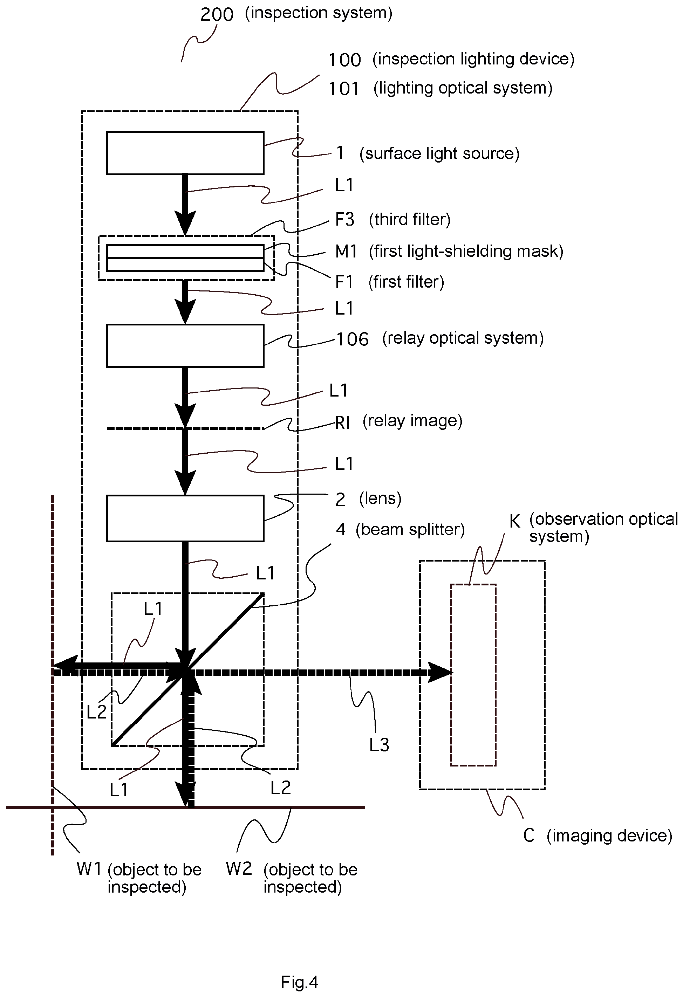

[Fig. 4] A schematic diagram showing components of an inspection lighting device, a lighting optical system, and an inspection system including a relay optical system and a beam splitter according to a fourth embodiment of the present invention, and a relationship between an irradiation optical path and an observation optical path, and among an irradiation solid angle, a solid angle of reflection/transmission light, and an observation solid angle.

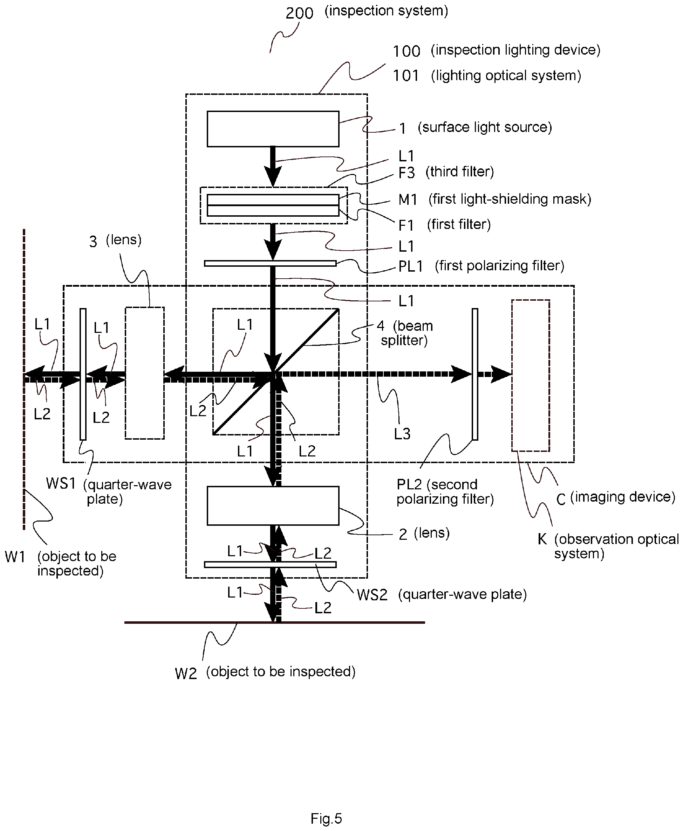

[Fig. 5] A schematic diagram showing components of an inspection lighting device, a lighting optical system, and an inspection system including a beam splitter according to a fifth embodiment of the present invention, and a relationship between an irradiation optical path and an observation optical path, and among an irradiation solid angle, a solid angle of reflection/transmission light, and an observation solid angle.

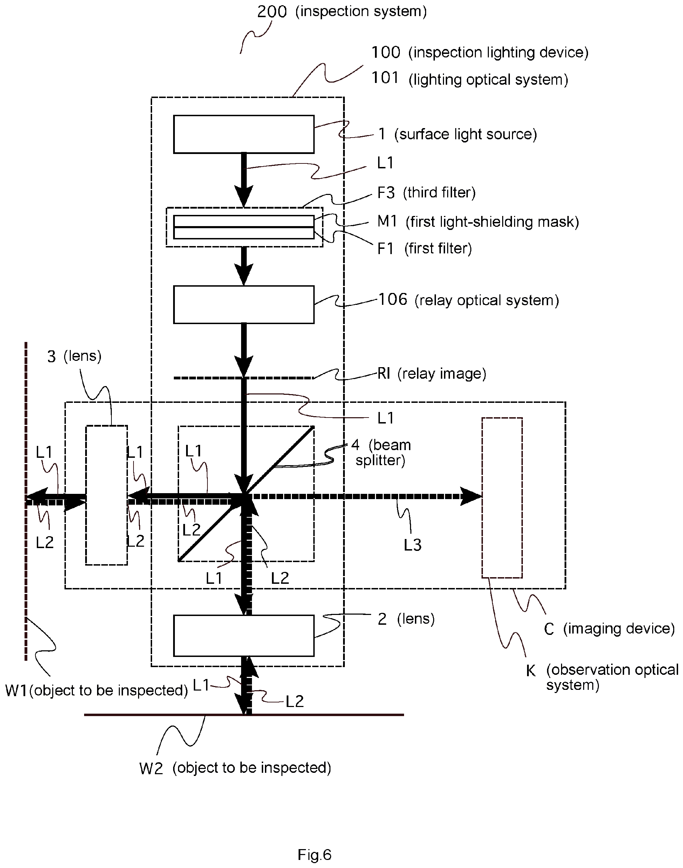

[Fig. 6] A schematic diagram showing components of an inspection lighting device, a lighting optical system, and an inspection system including a relay optical system and a beam splitter according to a sixth embodiment of the present invention, and a relationship between an irradiation optical path and an observation optical path, and among an irradiation solid angle, a solid angle of reflection/transmission light, and an observation solid angle.

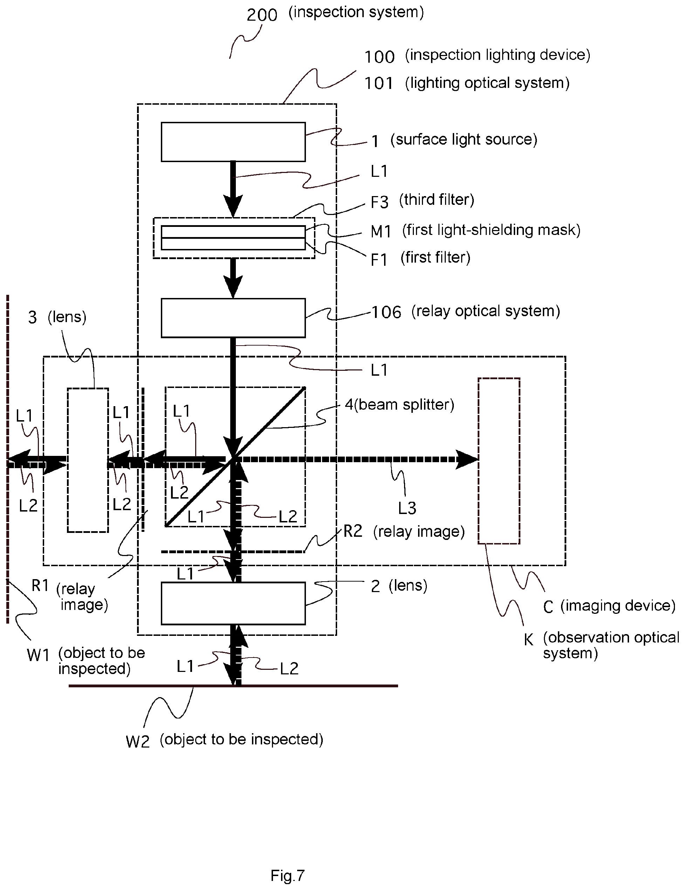

[Fig. 7] A schematic diagram showing components of an inspection lighting device, a lighting optical system, and an inspection system including a relay optical system and a beam splitter according to a seventh embodiment of the present invention, and a relationship between an irradiation optical path and an observation optical path, and among an irradiation solid angle, a solid angle of reflection/transmission light, and an observation solid angle.

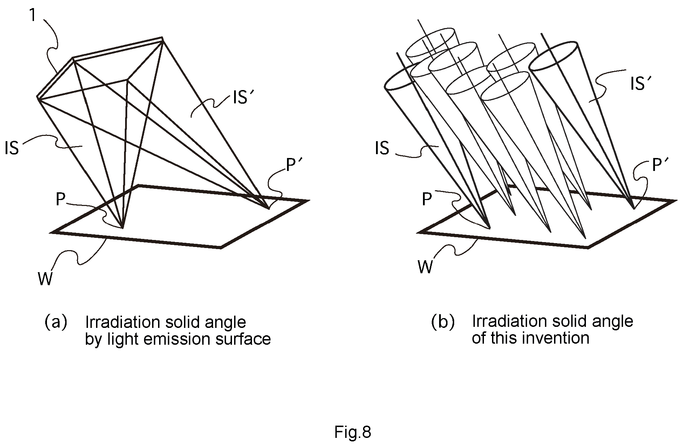

[Fig. 8] Schematic diagrams for comparison of irradiation solid angles of irradiation light. ((a) An irradiation solid angle formed by a surface light source. (b) An irradiation solid angle according to the present invention.)

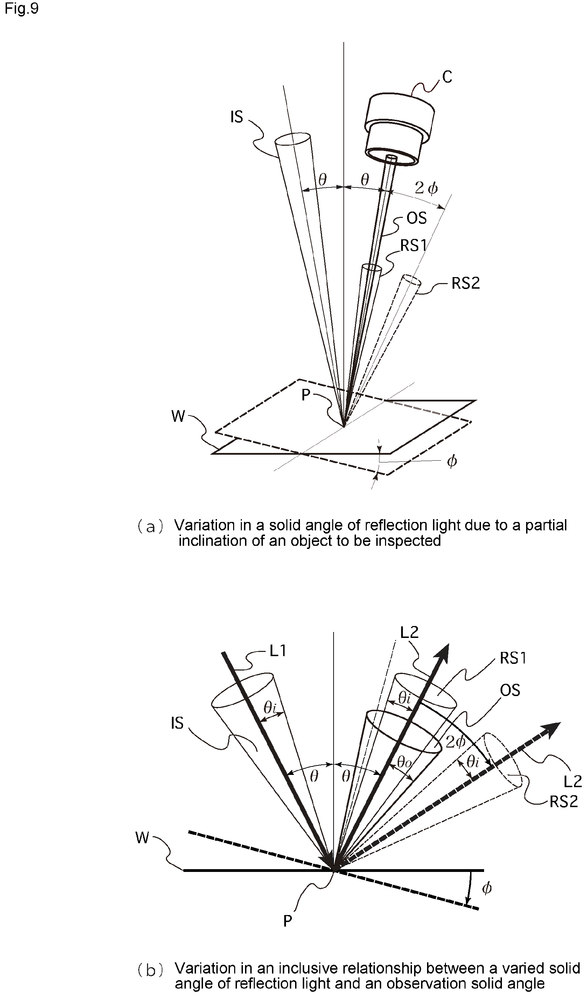

[Fig. 9] Schematic diagrams showing a variation in a relative relationship among an irradiation solid angle, a solid angle of reflection light, and an observation solid angle, depending on an inclination of an object to be inspected. ((a) A variation in a solid angle of reflection light. (b) A variation in an inclusive relationship between the a angle of reflection light and an observation solid angle.)

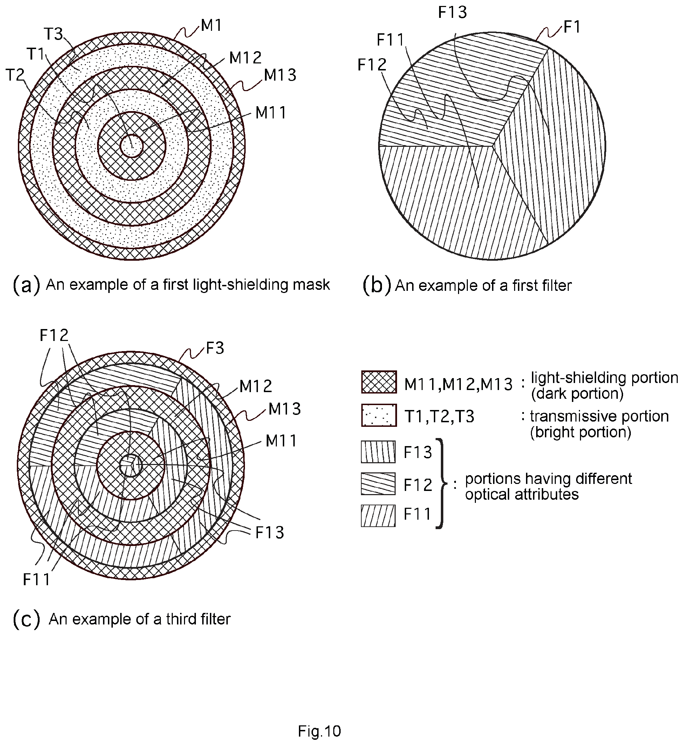

[Fig. 10] One embodiment of: a first light-shielding mask for forming a plurality of annular solid angle regions disposed concentrically so as to have no mutually adjacent portions; a first filter having solid angle regions of different optical attributes; and a third filter integrating both.

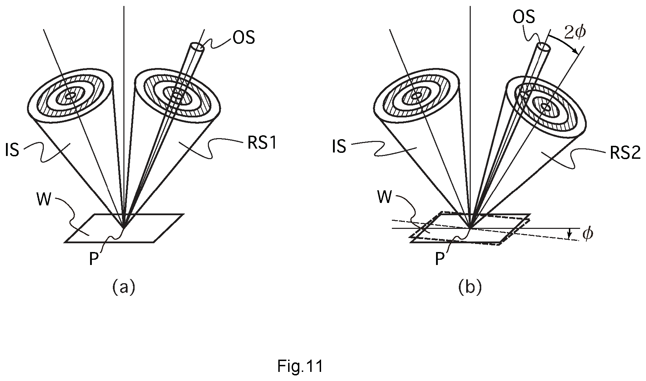

[Fig. 11] A schematic diagram showing a relative relationship between a solid angle of reflection light and an observation solid angle depending on an inclination of an object to be inspected, of an irradiation solid angle having a plurality of annular solid angle regions disposed concentrically so as to have no mutually adjacent portions.

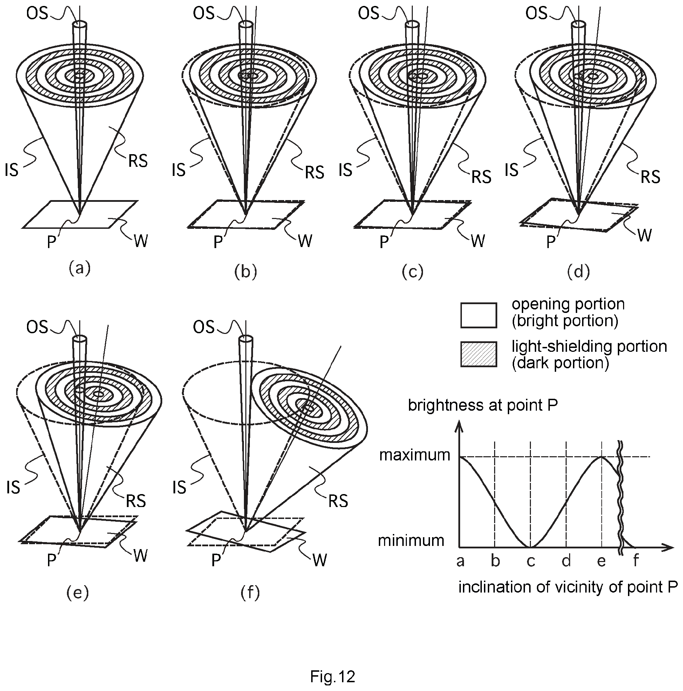

[Fig. 12] A schematic diagram showing a relative relationship between a solid angle of reflection light and an observation solid angle, and a relationship of a variation in brightness of an object to be inspected, depending on an inclination of the object to be inspected, when an irradiation solid angle having a plurality of annular solid angle regions disposed concentrically so as to have no mutually adjacent portions and an observation solid angle are made coaxial.

### Description of Embodiments

A first embodiment of the present invention will be described with reference to Fig. 1. Note that the present invention is not limited to the contents described in the following embodiments. Further, constituent features in the embodiments described below include those that can be easily conceived by a person skilled in the art, those that are substantially the same, and those within a so-called range of equivalents. Further, the constituent elements disclosed in the embodiments described below may be combined as appropriate, or may be appropriately selected and used.

In an inspection system 200 of the present invention, irradiation light is irradiated to an object to be inspected W along an irradiation optical path L1 by an inspection lighting device 100 and a lighting optical system 101, an irradiation solid angle IS is formed at respective points of the object to be inspected W, and reflection/transmission light L2 returned from the object to be inspected W is captured by an observation optical system K of an imaging device C, whereby an image of the object to be inspected W is captured and inspection is performed based on the image information thereof. In Fig. 1, an observation optical system that captures the transmission light L2 from the object to be inspected W is shown as K1, an imaging device thereof is shown as C1, an observation optical system that captures the reflection light L2 from the object to be inspected W is shown as K2, and an imaging device thereof is shown as C2; however, the imaging device that captures the reflection light and the transmission light may be either one, or may be provided with both.

The inspection lighting device 100 and the lighting optical system 101 are provided with: a surface light source 1 that emits inspection light; a lens 2 disposed between said surface light source 1 and said object to be inspected W, for forming an irradiation solid angle IS for said object to be inspected, in the inspection light L1 radiated from said surface light source 1 to irradiate said object to be inspected; and a first light-shielding mask M1 disposed between said surface light source 1 and said lens 2, on a front side or a rear side of a focal position of said lens 2, said first light-shielding mask M1 shielding light to form the irradiation solid angle IS of the inspection light irradiated to respective points of said object to be inspected, said first light-shielding mask M1 forming a plurality of annular solid angle regions disposed concentrically within said irradiation solid angle IS so as to have no mutually adjacent portions, as shown in Fig. 10 described later. The inspection lighting device 100 and the lighting optical system 101 are capable of forming the same irradiation solid angle IS for respective points of said object to be inspected W, regardless of a distance from the inspection lighting device 100 and the lighting optical system 101 to the object to be inspected W and positions of the respective points of the object to be inspected W. Said irradiation solid angle IS can be set so as to have the same relative angle with respect to an observation solid angle OS formed at the respective points of said object to be inspected W when said imaging device C captures the reflection/transmission light L2 from said object to be inspected W through said observation optical system K.

Further, the inspection lighting device 100 and the lighting optical system 101 may further comprise, adjacent to said first light-shielding mask M1, a first filter F1 capable of dividing the inspection light into arbitrary solid angle regions having partially different optical attributes by light of different wavelength bands, light of different polarization planes, or light of different light quantities, or capable of setting said optical attributes to vary continuously. Further, said first light-shielding mask M1 and said first filter F1 may be a third filter F3 unified as a means for forming the solid angle regions and the irradiation solid angle, having at least one of functions of said first light-shielding mask M1 and said first filter F1.

Further, between said first light-shielding mask M1 and said surface light source 1, in a vicinity at which said lens 2 forms an image on said object to be inspected W, at least one of a second light-shielding mask M2 and a fourth filter F4 that transmits only light having a specific attribute may be further provided, and an irradiation area or an irradiation pattern of the inspection light with respect to said object to be inspected may be arbitrarily generated by said second light-shielding mask M2 or said fourth filter F4. Further, said second light-shielding mask M2 and said fourth filter F4 that transmits only light having a specific attribute may be a fifth filter F5 having at least one of functions of said second light-shielding mask M2 and said fourth filter F4.

Note that, in the description of Fig. 2 and in Figs. 3, 4, 5, 6, and 7, the descriptions and depictions of said second light-shielding mask M2, said fourth filter F4, and said fifth filter F5 are omitted for simplicity, but in any of the embodiments, said second light-shielding mask M2, said fourth filter F4, and said fifth filter F5 may be installed in the same manner as in Fig. 1.

Next, a second embodiment of the present invention will be described with reference to Fig. 2. The first light-shielding mask M1, the first filter F1, and the third filter F3 described with reference to Fig. 1 may be disposed between the surface light source 1 and a relay optical system 106 (for example, a tandem-arranged lens), and a relay image RI imaged by said relay optical system 106 may be used in place of the first light-shielding mask M1, the first filter F1, and the third filter F3. Said relay image RI is a reduced image of the first light-shielding mask M1, the first filter F1, and the third filter F3. Note that the positions of the first light-shielding mask M1, the first filter F1, and the third filter F3 may also be variable along an irradiation optical path L1 (that is, a configuration in which the relay image RI of the first light-shielding mask M1, the first filter F1, and the third filter F3 can be disposed in a vicinity of the focal position of said lens 2).

The inspection light irradiated to the respective points of the object to be inspected W by the inspection lighting device 100 and the lighting optical system 101 has a constant shape regardless of a position on the object to be inspected W and a distance from the inspection lighting device 100 and the lighting optical system 101. By adjusting the first light-shielding mask M1, the first filter F1, and the third filter F3 that form the irradiation solid angle IS, or the relay image RI imaged by said relay optical system 106, along the irradiation optical path L1 in a vicinity of the focal position of the lens 2, an inclination of each irradiation solid angle IS with respect to the object to be inspected W can be made constant, or the inclination thereof can be adjusted around the irradiation optical axis. Further, the irradiation solid angle formed in this manner is formed by shaped transmitted light radiated from the lens 2 at uniform angles by the lens 2 and the first light-shielding mask M1, the first filter F1, and the third filter F3 disposed in a vicinity of the focal position thereof, or the relay image RI imaged by said relay optical system 106, and is not necessarily formed by imaging light through which the surface light source 1 is imaged on the object to be inspected W by the lens 2.

When the object light returned from the object to be inspected W is direct light such as specular reflection light or direct transmission light, the shape and size of the irradiation solid angle IS are maintained as a solid angle of said object light. A solid angle DS of this direct light has the same shape as the irradiation solid angle IS, and only light energy contained within the solid angle DS of the direct light is captured within the observation solid angle OS formed at respective points of the object to be inspected by the imaging device, and is imaged as the brightness at the respective points. Therefore, by keeping a solid angle element, which is the relative relationship of these solid angles, uniform, variations in the optical properties of the object to be inspected are quantitatively reflected in the captured image. The mechanism thereof will be described later.

Fig. 3 illustrates the third embodiment of the present invention, in which the first embodiment described in Fig. 1 is provided with a beam splitter 4 that either reflects the inspection light radiated from the surface light source 1 to change a direction of the irradiation optical path L1 thereof and transmits the reflection light from the object to be inspected W1 without changing the direction of the reflection optical path L2 so as to enable imaging by said imaging device as the observation optical path L3 inputted to said observation optical system K, or transmits said inspection light without changing the direction of the irradiation optical path L1 thereof and reflects the reflection light from the object to be inspected W2 to change the direction of the reflection optical path L2 so as to enable imaging by said imaging device as the observation optical path L3 inputted to said observation optical system K. By appropriately adjusting the irradiation solid angle of said inspection light for the respective points of said object to be inspected, the optical axis of the observation solid angle of said imaging device for the respective points of said object to be inspected and the optical axis of the solid angle of said reflection light or said transmission light emitted from the respective points can be made substantially coincident.

The beam splitter 4 described in Fig. 3 may be installed, with respect to the object to be inspected W, to make the irradiation optical path L1 and the reflection optical path L2, and the irradiation optical path L1 and the observation optical path L3, coincide and be coaxial, and to perform a function of separating said irradiation optical path L1 and said observation optical path L3 between said object to be inspected W and said first light-shielding mask M1 and said first filter F1, or said third filter F3, or a relay optical system 106 for forming the relay image RI thereof. A configuration in which the relay optical system 106 is added to the third embodiment is the fourth embodiment shown in Fig. 4. A configuration in which, in the third embodiment, the beam splitter 4 is disposed between the lens 2 and said first light-shielding mask M1 and said first filter F1, or said third filter F3, is the fifth embodiment of the present invention shown in Fig. 5. Configurations in which the relay optical system 106 is added to this fifth embodiment are the sixth and seventh embodiments of the present invention shown in Figs. 6 and 7. The sixth embodiment is a case in which the relay image RI is positioned on a side of the beam splitter 4 opposite to the object to be inspected, and the seventh embodiment is a case in which the relay image RI is positioned on a side of the beam splitter 4 facing the object to be inspected, both of which function effectively as embodiments of the present invention.

Note that, in the fifth, sixth, and seventh embodiments, the lens 2 or 3 is also used so that the imaging device captures the reflection light from the object to be inspected W by means of the observation solid angle thereof. Therefore, when the lens 2 or 3 is used to form the observation solid angle at the same time as forming the irradiation solid angle, and the lens 3 is included in the imaging device as a part of the observation optical system, the illumination optical system thereof is a portion including from the surface light source 1 to the beam splitter 4; conversely, when the inspection lighting device is configured so as to include the lens 2, the imaging device including the observation optical system also extends to the beam splitter.

Further, in the fifth, sixth, and seventh embodiments, since the lens 2 or the lens 3 is shared by the illumination optical system and the observation optical system, there is a problem on the observation optical system side in that a portion of the irradiation light irradiated from the illumination optical system is reflected by the lens 2 or the lens 3 toward the observation optical system side. In a typical coaxial optical system, since uniform irradiation light is irradiated over the entire opening portion, the reflection from this lens is relatively dark as compared with the reflection light from the object to be inspected, and can be ignored if the reflection from the lens is uniform. However, in the present invention, irradiation light including a pattern for forming the irradiation solid angle is irradiated by the first light-shielding mask M1 and the first filter F1, or the third filter F3, or the relay optical system 106, and this pattern also appears in the reflected stray light reflected from said lens 2 or said lens 3. Therefore, it is necessary to shield only the reflected stray light from this lens.

Therefore, in the fifth, sixth, and seventh embodiments, with respect to the reflected stray light generated by the reflection of the irradiation light at the lens, a first polarizing filter PL1 is installed on the irradiation optical path L1, on the side of the beam splitter 4 opposite to the object to be inspected, a second polarizing filter PL2 is installed on the observation optical path L3, on the side of the beam splitter 4 opposite to the object to be inspected, and further, a quarter-wave plate WS1 or WS2 is installed on the object to be inspected side of the lens 2 or the lens 3. The first polarizing filter PL1 and the second polarizing filter PL2 are arranged as crossed Nicols by setting easy transmission axes thereof to be perpendicular to each other to cut the reflected stray light from the lens, and the easy transmission axis of the quarter-wave plate WS1 or WS2 is installed inclined by 45 degrees with respect to the easy transmission axis of the first polarizing filter PL1. As a result, the irradiation light irradiated to the object to be inspected W is irradiated as circularly polarized light, and the reflection light returned from the object to be inspected while preserving this polarization passes through the quarter-wave plate WS1 or WS2 once more to become linearly polarized light inclined by 90 degrees with respect to the easy transmission axis of the first polarizing filter PL1, and can transmit through the second polarizing filter PL2 installed on the observation optical path. Consequently, only the reflected stray light from the lens, which is linearly polarized light in the easy transmission axis direction of the first polarizing filter PL1, is cut off, and the reflection light from the object to be inspected can be observed. Further, when the object light returned from the object to be inspected W is scattered light, since the scattered light becomes non-polarized even if the irradiation light is polarized, the scattered light can also transmit through the second polarizing filter PL2 installed on the observation optical path. Further, when the easy transmission axis of the quarter-wave plate WS1 or WS2 is installed in the same direction as the easy transmission axis of the first polarizing filter PL1, or inclined by 90 degrees thereto, the irradiation light that has become linearly polarized light at the first polarizing filter PL1 is irradiated as it is to the object to be inspected W, and in this case, the reflection light from the object to be inspected W also remains the same linearly polarized light and is therefore shielded by the second polarizing filter installed on the observation optical path. However, since the non-polarized scattered light component transmits therethrough, in this case, only the scattered light from the object to be inspected can be observed. Note that, when only the scattered light is observed, said quarter-wave plate may not be installed. Further, the first polarizing filter PL1, the second polarizing filter PL2, and the quarter-wave plate WS1 or WS2 are illustrated only in Fig. 5 and are omitted in Figs. 6 and 7 for simplicity, but they may be installed in the same manner as in Fig. 5.

Here, the object light is composed of a direct light component that preserves polarization at a certain ratio and a non-polarized scattered light component. Compared with a component ratio of the direct light and the scattered light when non-polarized light is irradiated, a component ratio of the direct light returned while preserving polarization and the scattered light returned as non-polarized light, when observed through an analyzer that transmits this polarization with polarized light being irradiated, becomes larger according to the law of conservation of energy. In a bright field for observing the direct light, the scattered light component often becomes noise, and being able to reduce this component leads to improvement of the S/N (signal-to-noise ratio) in converting variations in optical properties of the object to be inspected W into brightness information of light. Although the observation luminance itself is reduced by the polarizing filter or the like, the fact that the variations in the optical properties of the object to be inspected W can be detected with a higher S/N is more advantageous as the variations are more minute.

The relative relationship between the irradiation solid angle IS and the solid angle DS of direct light, such as specular reflection light or direct transmission light, returned from the object by directly reflecting this irradiation solid angle IS, and the observation solid angle OS, is referred to as a solid angle element. In a bright field in which brightness of the direct light is imaged, a brightness profile of the image varies according to this solid angle element. Regarding brightness with respect to the inclination of the object to be inspected in the bright field, depending on a plane half-angle θi of the irradiation solid angle IS and a plane half-angle θo of the observation solid angle OS, a maximum detectable inclination angle of the object to be inspected W becomes 1/2 of θi+θo. When an imaging device C that outputs brightness gradation in 8 bits is used to capture an inclination angle within this range, for example, 1/256 of 1/2 of θi+θo becomes a theoretical detection sensitivity for the inclination of the object to be inspected W. For example, when θi and θo are each 1 degree, a 1x lens is used, and a light sensor having square pixels of 3.45 µm per pixel is used, simply by irradiating light by the inspection lighting according to the present invention under imaging conditions of an ordinary camera in visible light, a theoretical detection resolution of the inclination of the object to be inspected W becomes 0.0039 degrees, and a theoretical resolution in a depth direction becomes 0.24 nm. This is already an extraordinary value exceeding Rayleigh's diffraction limit. A horizontal resolution, with merely pixel size of 3.45 µm, by observation with visible light using a normal camera, in ordinary imaging without using a microscope or anything else, reaches a resolution of 1000 times or more that of a general microscope. This is already a resolution at the level of an electron microscope.

Therefore, in observation of the object to be inspected W according to the present invention, since brightness accuracy of about 1/1000 of ordinary observation is required, it is necessary to suppress stray light in the observation optical system as much as possible, and the mechanism for cutting stray light by combining the crossed Nicols of said polarizing filters and the quarter-wave plate is essential.

Next, with reference to Figs. 8 and 9, a relationship between the irradiation solid angle IS and a solid angle RS of the reflection light, which is the solid angle DS of the object light returned from the object to be inspected W with the same solid angle as said irradiation solid angle, will be described.

The present invention is characterized in that, by means of said first light-shielding mask and said first filter, or said third filter, which form a plurality of annular solid angle regions disposed concentrically so as to have no mutually adjacent portions, the optical attributes thereof can be arbitrarily varied, irradiation light can be irradiated under the same conditions at all positions in the entire field-of-view of said object to be inspected W imaged by said imaging device C, and further, the irradiation optical axis and the irradiation solid angle can be set in a state suitable for optical characteristics of said imaging device. Fig. 8(a) shows respective irradiation solid angles IS and IS' at different positions P and P' of the object to be inspected W when the object to be inspected W is illuminated by the surface light source 1, which is a typical conventional illumination, and it can be seen that the shape and the optical axis of the irradiation solid angle differ between the two. Fig. 8(b) shows an aspect of the irradiation light according to the present invention, and the irradiation solid angle can be formed under the same conditions not only at the different positions P and P' of the object to be inspected W but also at all positions in the entire field-of-view of said object to be inspected W. By doing so, particularly in a bright field illumination method for observing the direct light of the reflection light or the transmission light returned from said object to be inspected W, a remarkable effect can be expected. Here, the reflection light refers to specular reflection light returned from a mirror surface or the like, and the transmission light refers to direct transmission light that transmits through a transparent object. Also in a dark field illumination method for observing scattered light, many scattered lights vary depending on the optical attribute or the irradiation solid angle with which they are irradiated, so that it becomes possible to detect minute variations in optical properties of the object to be inspected W which could not be realized by conventional illumination.

Fig. 9(a), focusing on a point P on said object to be inspected W, in a case in which the inspection light with the irradiation solid angle IS is irradiated to said point P, shows how the brightness at the point P varies when the surface including the point P of said object to be inspected is partially inclined by φ, by showing how the relative relationship among respective solid angles becomes when a solid angle RS1 of the reflection light from the point P varies to a solid angle RS2, with respect to an observation solid angle OS formed at the point P by said imaging device C.

In Fig. 9(a), the shapes and sizes of the solid angles RS1 and RS2 of said reflection light from the point P are equal to the irradiation solid angle IS of the inspection light for the point P. Further, an inclination of the solid angle RS1 of said reflection light is inclined in a direction line-symmetric to the irradiation solid angle IS of said inspection light with respect to the normal raised on the point P, by the same amount as an inclination θ of the irradiation solid angle IS of said inspection light. At this time, assuming that the observation solid angle OS formed at the point P by said imaging device C has its optical axis coincident with that of the solid angle RS1 of said reflection light, and that its size is very small as compared with the solid angle RS1 of said reflection light, the brightness at the point P captured by said imaging device C is limited by the size of the observation solid angle OS thereof, and does not vary even if the solid angle RS1 of said reflection light is inclined within a range in which this inclusive relationship does not change. However, it is assumed that the light energy within the irradiation solid angle IS and within the solid angles RS1 and RS2 of the reflection light is uniformly distributed within the solid angles.

Next, in Figs. 9(a) and (b), considering a case in which the surface including the point P of said object to be inspected W is partially inclined by φ, the solid angle RS1 of the reflection light from the point P is inclined by 2φ as RS2 indicated by dotted lines in the figure. At this time, if the solid angle RS2 of the reflection light from the point P has no inclusive relationship with the observation solid angle OS formed at the point P by said imaging device C, the brightness at the point P seen from said imaging device C becomes 0; however, if there is a partial inclusive relationship with said observation solid angle OS formed at the point P by said imaging device C, light contained in a solid angle portion where the two overlap is reflected as the brightness at the point P. That is, when a plane half-angle θi of the solid angle RS2 of the reflection light from the point P is larger than an angle obtained by subtracting a plane half-angle θo of said observation solid angle OS from the inclination angle 2φ of said reflection light and is smaller than an angle obtained by adding the plane half-angle θo of said observation solid angle OS to the inclination angle 2φ of said reflection light, the brightness at the point P varies according to the inclination angle 2φ of said reflection light. However, if the plane half-angle θi of said irradiation solid angle IS is larger than an angle obtained by adding the plane half-angle θo of said observation solid angle OS to the inclination angle 2φ of the reflection light caused by the partial inclination of said object to be inspected W, the brightness at the point P does not vary. Further, if the plane half-angle θo of the observation solid angle OS is larger than a sum of the inclination angle 2φ of said reflection light and the plane half-angle θi of the solid angle RS of said reflection light, the brightness at the point P likewise does not vary. This indicates, ultimately, that the brightness at the point P is determined by an inclusive relationship between the solid angle RS of the reflection light from the point P and the observation solid angle OS for the point P, and that a variation in the brightness at the point P can be controlled by setting the relative relationship between the irradiation solid angle IS of the inspection light irradiated to the point P and the observation solid angle OS for the point P with respect to shape, size, and inclination.

Here, the larger a sum θi+θo of the plane half-angles of the irradiation solid angle IS and the observation solid angle OS, or the larger an absolute value |θi-θo| of a difference between the plane half-angles of the irradiation solid angle IS and the observation solid angle OS, the smaller a sensitivity with respect to a variation in the inclination of the object to be inspected W, that is, the smaller an amount of variation when capturing the inclination angle as a variation in the brightness at the point P. That is, in order to detect a minute inclination of the object to be inspected W with high sensitivity, the smaller the sum θi+θo of the plane half-angles of the irradiation solid angle IS and the observation solid angle OS, or the smaller the absolute value |θi-θo| of the difference between the plane half-angles of the irradiation solid angle IS and the observation solid angle OS, the better. However, in this case, in a portion where the inclination of the object to be inspected W becomes larger than 1/2 of the sum θi+θo of the plane half-angles of the irradiation solid angle IS and the observation solid angle OS, the object light returned from the object to be inspected W can no longer be captured, and although the sensitivity with respect to the inclination of the object to be inspected W is increased, a detection field-of-view for the object to be inspected W becomes narrower.

Fig. 9(b) is a cross-sectional view, in (a), of a plane including the irradiation optical axis of the inspection light, the normal to the point P, and the reflection optical axis from the point P, and the inclination of each element and the inclusive relationship thereof can be quantitatively grasped more clearly. However, Fig. 9(b) illustrates a case in which the observation solid angle OS is larger than the irradiation solid angle IS, that is, the solid angle RS1 of the reflection light. When the object to be inspected W is inclined and the solid angle RS1 of the reflection light from the point P becomes RS2 indicated by dotted lines, in this figure, the inclusive relationship with said observation solid angle OS is lost, and light energy within the observation solid angle OS becomes 0. Therefore, even if light contained in this observation solid angle OS is collected again to a point to form an image, the point P appears only completely dark. However, also in this case, by adjusting the relative relationship between said irradiation solid angle IS and said observation solid angle OS to cause an inclusive relationship between the solid angle RS of said reflection light and said observation solid angle OS to arise, the brightness at the point P varies according to a variation in the size of an overlapping portion thereof.

In Fig. 9(b), here, if the shape and size of the observation solid angle OS are the same as those of the irradiation solid angle IS and coincide with the inclination of the solid angle RS of the reflection light from the point P, when the object to be inspected W is inclined even slightly from that state, a portion where the observation solid angle OS and the solid angle RS of the reflection light overlap decreases by at least that amount, so that the brightness at the point P viewed through the observation solid angle OS varies by that amount. Moreover, the smaller each solid angle, the larger the amount of variation in the brightness at the point P when the object to be inspected W is inclined by the same angle; conversely, the larger each solid angle, the smaller the amount of variation in the brightness at the point P when the object to be inspected W is inclined by the same angle. Further, if the shape, size, inclination, and the like of the irradiation solid angle IS and the observation solid angle OS are appropriately set in correspondence with variations in light occurring at desired characteristic points of the object to be inspected, detection of characteristic points that could not heretofore be stably detected can be performed with high accuracy. The present invention focuses on this principle and, as will be described later, the shape of the irradiation solid angle includes a plurality of annular solid angle regions disposed concentrically so as to have no mutually adjacent portions, whereby the inclusive relationship between this annular solid angle region and the observation solid angle OS can be kept the same even in a portion where the inclination of the object to be inspected W is larger, and sensitivity with respect to the inclination can be maintained.

Next, an embodiment of the first light-shielding mask M1, the first filter F1, and the third filter F3 will be described with reference to Fig. 10.

In the first light-shielding mask M1, for example, as shown in Fig. 10(a), light-shielding portions M11, M12, and M13 that substantially shield light form annular opening portions T1, T2, and T3 that are not mutually adjacent. Although Fig. 10(a) illustrates a state in which a peripheral portion is the light-shielding portion M13 and a center portion is an opening portion, conversely, the center portion may be a light-shielding portion. Further, the light-shielding portion may be a portion that shields only light having a specific attribute. Further, as shown in Fig. 10(b), in the first filter F1, patterns F11, F12, and F13 for forming three kinds of solid angle regions having different optical attributes are set. Here, the pattern is a radial pattern around the optical axis, but this may also be optimized to an arbitrary pattern depending on a characteristic point of interest of said object to be inspected. The third filter F3 shown in Fig. 10(c) is obtained by integrating this first light-shielding mask M1 and said first filter F1, in which the annular solid angle regions T1, T2, and T3 not mutually adjacent shown in (a) are respectively divided into three portions F11, F12, and F13 having different optical attributes; by doing so, it becomes possible to discriminate in which direction the object to be inspected is inclined. Note that the three portions F11, F12, and F13 having different optical attributes may have optical attributes that continuously vary, or may have optical attributes that vary for each annular transmissive portion.

Fig. 11 shows a relationship between, when the irradiation solid angle having a plurality of annular solid angle regions disposed concentrically so as to have no mutually adjacent portions is formed at the point P on the object to be inspected W, the reflection lights RS1 and RS2 thereof, and the observation solid angle OS formed at the point P by the imaging device C. A case in which the irradiation solid angle IS and the observation solid angle OS are in directions of specular reflection with respect to each other for the object to be inspected W is shown in (a), in which the observation solid angle OS has an inclusive relationship with a bright portion at the center portion of the irradiation solid angle and the point P is observed brightly. In Fig. 11(b), when the object to be inspected W is inclined by φ, a solid angle RS2 of the reflection light reflected while maintaining the solid angle IS of the irradiation light is inclined by 2φ with respect to the solid angle RS1 of the reflection light reflected in the direction of specular reflection in (a). As a result, the solid angle RS2 is also inclined by 2φ with respect to the optical axis of the observation solid angle OS, and in the example shown in (b), the observation solid angle OS has its inclusive portion lying between the annular solid angle regions formed concentrically within the solid angle RS2 of the reflection light, so that the brightness at the point P becomes darker by that amount.

Fig. 12 shows a relationship between the solid angle RS of the reflection light returned from the object to be inspected W and the observation solid angle OS, and how the brightness at the point P becomes with respect to the inclination of the object to be inspected W, when, by using said beam splitter, an irradiation optical axis of the irradiation solid angle having a plurality of annular solid angle regions disposed concentrically so as to have no mutually adjacent portions, formed at the point P on the object to be inspected W, and an observation optical axis of the observation solid angle OS formed at the point P by the imaging device C are made coaxial. Note that, in Fig. 12, with respect to the plane half-angle θo of the observation solid angle OS, a plane half-angle θi of a bright portion solid angle region at the center portion of the irradiation solid angle is set equal to the plane half-angle θo of the observation solid angle OS, and the widths of bright portion annular solid angle regions disposed concentrically within the irradiation solid angle, and of dark portion annular solid angle regions between adjacent bright portion annular solid angle regions, are set to twice the plane half-angle θo of the observation solid angle OS, that is, 2θo.

Fig. 12(a) shows a state in which the normal of the surface in the vicinity of the point P of the object to be inspected coincides with the irradiation optical axis and the observation optical axis, at which time the brightness at the point P is the maximum value. When the object to be inspected W is inclined, the brightness at the point P gradually becomes darker as shown in (b), and when the inclination of the object to be inspected W becomes θo, as shown in (c), the observation solid angle OS overlaps with the dark portion annular solid angle region within the solid angle RS of the reflection light that maintains and reflects the irradiation solid angle IS, and the brightness at the point P becomes the minimum value. When the object to be inspected W is further inclined and, through (d), the inclination thereof becomes 2θo, as shown in (e), the observation solid angle OS overlaps with the bright portion annular solid angle region within the solid angle RS of the reflection light that maintains and reflects the irradiation solid angle IS, and the brightness at the point P returns to the maximum value again. During this, the variation of the brightness at the point P with respect to the inclination of the object to be inspected W is substantially linear, and each time the inclination of the object to be inspected W becomes an integer multiple of θo, the brightness alternately repeats from the maximum value to the minimum value, and from the minimum value to the maximum value. After the inclination exceeds 1/2 of the sum θi+θo of the plane half-angle θi of the irradiation solid angle and the plane half-angle θo of the observation solid angle, the inclusive relationship between the irradiation solid angle IS and the observation solid angle OS is lost, so that the brightness at the point P remains at the minimum value.

Hereinafter, each element will be described in detail.

The surface light source 1 may be one in which one or more chip-type LEDs are disposed, an organic EL, or one in which light from a side light is guided by a light guide plate, or the like. Note that the position of the surface light source 1 may be variable along the irradiation optical axis L1, and by the lens 2 via the first light-shielding mask M1, the first filter F1, and the third filter F3 disposed in the vicinity of the focal position of the lens 2 and on a front side or a rear side thereof, a uniform irradiation solid angle IS can be formed regardless of a distance from the object to be inspected W. The light that forms this irradiation solid angle IS is composed of light radiated from respective points of the surface light source, and from which point the light is radiated is determined by a distance of how far the irradiation solid angle IS is away from the lens 2 on the irradiation optical axis L1, and a distance and direction of how far and in which direction the irradiation solid angle IS is away from the irradiation optical axis in a direction perpendicular to the irradiation optical axis, and also varies depending on the distance between the surface light source 1 and the lens 2. However, for all irradiation solid angles IS, a light beam bundle forming one irradiation solid angle is not necessarily light radiated from one point of the surface light source. If a light beam bundle forming a certain irradiation solid angle were formed by a light beam bundle radiated from one point of the surface light source 1, the position where the irradiation solid angle is formed would be a position where the surface light source 1 is imaged by the lens 2. The irradiation solid angle utilized in the present invention is not limited to those at the imaging position, and as long as the surface light source also includes light beam bundles radiated from a plurality of points other than the imaging position, a more uniform irradiation solid angle can be formed without reflecting brightness unevenness of the surface light source.

Further, by configuring a portion on the irradiation optical path L1 from the surface light source 1 to the first light-shielding mask M1 and the first filter F1, or the third filter F3, with a flat panel display such as a liquid crystal monitor device that combines a white light source with a color liquid crystal or the like capable of dynamically changing an emission wavelength distribution, a luminance distribution, and a polarization state distribution of the illumination surface thereof, it becomes possible to cope with various kinds of objects to be inspected. By doing so, the display indication can be controlled in real time to form various irradiation solid angles, whereby it becomes possible to construct inspection lighting device, a lighting optical system, and further an inspection system having a higher degree of optimization freedom.

The relay optical system 116 is, for example, a refractive lens system that passes the irradiation light that passes through the first light-shielding mask M1 and the first filter F1, or the third filter F3, and may be a single lens or may be composed of a plurality of lenses. Note that the lens includes, in addition to a lens having an uneven shape, a refractive index distribution type lens or the like.

The first light-shielding mask M1 and the first filter F1, or the third filter F3, for forming the irradiation solid angle with respect to the lens 2, are optical elements that determine a numerical aperture of the illumination optical system. Since the lens 2 is a substantially telecentric optical system on the object to be inspected W side, they are disposed in a vicinity of a focal position on a side of the lens 2 opposite to the object to be inspected. However, in the case of the fifth, sixth, and seventh embodiments, in order to also function as an objective lens of the observation optical system, an aperture stop that forms the observation solid angle is installed in a vicinity of the focal position on the side opposite to the object to be inspected of the same lens 2 as the illumination system. Therefore, when this focal position is on the side of the beam splitter 4 opposite to the object to be inspected, which separates the irradiation optical axis and the observation optical axis, the aperture stop can be installed separately from the first light-shielding mask M1 and the first filter F1, or the third filter F3, for forming the irradiation solid angle, which determines the numerical aperture of the illumination system, that is, the size, shape, pattern, and the like of the irradiation solid angle. However, when the focal position of the lens 2 is on the side of said beam splitter facing the object to be inspected, by using a relay optical system to form a relay image for forming the irradiation solid angle at the same position as the aperture stop that determines the size and shape of the observation solid angle, on an inner diameter portion of the aperture stop, it becomes possible to freely form the irradiation solid angle within that range.

In the irradiation solid angle IS formed by the first light-shielding mask M1, if a plane half-angle of a solid angle region serving as a center opening portion thereof is equal to the plane half-angle θo of the observation solid angle OS, then with respect to the inclination of the object to be inspected W, the reflection light having the same solid angle RS as said irradiation solid angle is inclined, and an inclusive portion between the observation solid angle OS and a center solid angle region of the reflection light RS necessarily varies, resulting in a condition with the highest detection sensitivity for inclination. Further, the smaller the plane half-angle θo of the observation solid angle, the higher the detection sensitivity. To maximize a brightness variation of observation luminance with respect to the inclination of the object to be inspected W, if a solid angle region serving as an annular light-shielding portion is provided concentrically outside the center opening portion, and a width of the light-shielding portion is set to twice the plane half-angle θo of the observation solid angle OS, then when the inclination of the object to be inspected W is inclined up to θo, regardless of the direction of the inclination, the observation solid angle OS completely enters the solid angle region serving as the light-shielding portion, light energy captured by the observation solid angle becomes minimum, and the brightness variation thereof becomes maximum. Further, if a solid angle region serving as an annular opening portion is provided concentrically outside said light-shielding portion, and a width of said opening portion is set to twice the plane half-angle θo of the observation solid angle OS, then when the object to be inspected W is further inclined by θo, the observation solid angle OS completely enters the solid angle region serving as the opening portion, light energy captured by the observation solid angle becomes maximum, the brightness variation thereof becomes maximum, and the brightness becomes the same as when the observation solid angle OS coincides with the optical axis center of the solid angle RS of the reflection light. Thereafter, if the annular solid angle regions of the light-shielding portion and the opening portion are concentrically disposed with the same width, the brightness variation is repeated with the same sensitivity with respect to the inclination of the object to be inspected W until the inclination of the object to be inspected W exceeds 1/2 of the sum θi+θo of the plane half-angle θi of the irradiation solid angle and the plane half-angle θo of the observation solid angle, and when the inclination of the object to be inspected W exceeds 1/2 of the sum θi+θo of the plane half-angle θi of the irradiation solid angle and the plane half-angle θo of the observation solid angle, thereafter, even if the object to be inspected is further inclined, the observation solid angle OS cannot capture light energy from the solid angle RS of the reflection light from the object to be inspected W, so that the luminance becomes the minimum luminance. Therefore, by setting the width of a dark portion, which is the light-shielding portion of the first light-shielding mask M1, and the width of a bright portion, which is the opening portion that is not shielded from light, to twice the plane half-angle θo of the observation solid angle OS, and by configuring them as annular opening portions and annular light-shielding portions that are concentrically and equidistantly disposed, with the center portion being an opening portion having the same plane half-angle as the plane half-angle θo of the observation solid angle OS, the detection sensitivity of the inclination of the object to be inspected W with respect to said observation solid angle OS can be most uniformly and most highly set.

Note that, in the first light-shielding mask M1, a center portion may be set as a light-shielding portion having the same plane half-angle as the plane half-angle θo of the observation solid angle OS, an outer side thereof may be a concentric annular opening portion with a width of 2θo, and a further outer side thereof may be a concentric annular light-shielding portion with a width of 2θo, and thereafter, similarly, light-shielding portions and opening portions may be alternately disposed up to the plane half-angle θi of the irradiation solid angle IS. Further, by setting an interval between the light-shielding portion and the opening portion to be the same and varying the widths thereof, an area where the brightness varies according to inclination can be changed, or the minimum luminance can be varied up to a certain brightness, and further, a degree of variation in the brightness due to the inclination of the object to be inspected W can also be varied. Furthermore, the interval between the light-shielding portion and the opening portion may be varied, and an inclusive relationship with the observation solid angle OS may be appropriately and arbitrarily set in an arbitrary angular range.

### Reference Signs List

- 200 :: Inspection system
- 100 :: Inspection lighting device
- C :: Imaging device
- C1 :: Imaging device (used under different conditions in the same drawing)
- C2 :: Imaging device (used under different conditions in the same drawing)
- K :: Observation optical system
- K1 :: Observation optical system (used under different conditions in the same drawing)
- K2 :: Observation optical system (used under different conditions in the same drawing)
- 1 :: Surface light source
- 11 :: Light emission surface
- 2 :: Lens
- 3 :: Lens (used under different conditions in the same drawing)
- 4 :: Beam splitter
- L1 :: Irradiation optical path
- L2 :: Reflection/transmission optical path (object optical path)
- L3 :: Observation optical path (observation optical axis)
- M1 :: First light-shielding mask
- M11 :: Light-shielding portion of the first light-shielding mask
- M12 :: Light-shielding portion of the first light-shielding mask
- M13 :: Light-shielding portion of the first light-shielding mask
- F1 :: First filter
- F11 :: Portion of the first filter that transmits light having a certain optical attribute 1
- F12 :: Portion of the first filter that transmits light having a certain optical attribute 2
- F13 :: Portion of the first filter that transmits light having a certain optical attribute 3
- F2 :: Second filter (in the imaging device)
- F3 :: Third filter
- M2 :: Second light-shielding mask
- F4 :: Fourth filter
- F5 :: Fifth filter
- 106 :: Relay optical system
- RI :: Relay image
- R1 :: Relay image (used under different conditions in the same drawing)
- R2 :: Relay image (used under different conditions in the same drawing)
- W :: Object to be inspected
- W1 :: Object to be inspected (used under different conditions in the same drawing)
- W2 :: Object to be inspected (used under different conditions in the same drawing)
- P :: A certain point on the object to be inspected W
- P' :: Another point on the object to be inspected W
- φ :: Inclination angle of the object to be inspected
- IS :: Irradiation solid angle
- IS' :: Another irradiation solid angle
- θi :: Plane half-angle of the irradiation solid angle
- OS :: Observation solid angle
- θo :: Plane half-angle of the observation solid angle
- RS :: Solid angle of reflection light
- RS1 :: Solid angle of reflection light (used under different conditions in the same drawing)
- RS2 :: Solid angle of reflection light (used under different conditions in the same drawing)

## Claims

1. An inspection lighting device for irradiating an object to be inspected with an inspection light, comprising:
a surface light source that emits the inspection light;
a lens disposed between said surface light source and said object to be inspected, for forming an irradiation solid angle for respective points of said object to be inspected, in the inspection light emitted from said surface light source to irradiate said object to be inspected; and
a first light-shielding mask, or a relay image of said first light-shielding mask, forming a plurality of annular solid angle regions disposed concentrically within said irradiation solid angle and having no mutually adjacent portions, said first light-shielding mask or said relay image of said first light-shielding mask being disposed between said surface light source and said lens,
wherein said inspection lighting device is capable of simultaneously forming the same irradiation solid angle for respective points of said object to be inspected, regardless of a distance from said lens and positions of respective points of said object to be inspected.

2. The inspection lighting device according to claim 1,
wherein a first filter, or a third filter integrating functions of said first light-shielding mask and said first filter, or a relay image of said first light-shielding mask and said first filter, or a relay image of said third filter, is disposed between said surface light source and said lens,
and wherein said inspection lighting device is capable of further forming solid angle regions having specific optical attributes within said irradiation solid angle.

3. The inspection lighting device according to claim 1 or 2, further comprising
at least one of a second light-shielding mask and a fourth filter, or a fifth filter integrating functions of the second light-shielding mask and the fourth filter, between said surface light source and said lens,
wherein said inspection lighting device is capable of arbitrarily setting an irradiation area, an illumination shape or an irradiation pattern, or optical attributes of the inspection light with respect to said object to be inspected.

4. The inspection lighting device according to any one of claims 1 to 3,
wherein in an inspection system further comprising an imaging device that captures object light returned from said object to be inspected and picks up an image, said inspection lighting device is capable of setting said irradiation solid angle so as to have the same relative angle with respect to an observation solid angle formed at respective points of said object to be inspected for said imaging device to capture said object light.

5. The inspection lighting device according to any one of claims 1 to 4, further comprising
a beam splitter disposed on a side of said lens facing said object to be inspected, said beam splitter making an irradiation optical path and a reflection optical path of reflection light returned from said object to be inspected coaxial with respect to said object to be inspected, and separating said irradiation optical path and said reflection optical path with respect to said lens.

6. The inspection lighting device according to any one of claims 1 to 4, further comprising
a beam splitter disposed on a side of said lens opposite to said object to be inspected, said beam splitter making an irradiation optical path and a reflection optical path of reflection light returned from said object to be inspected coaxial with respect to said object to be inspected, and separating said irradiation optical path and said reflection optical path with respect to said first light-shielding mask.

7. The inspection lighting device according to claim 6, further comprising
a first polarizing filter disposed on said irradiation optical path entering said beam splitter, and
a second polarizing filter disposed on said reflection optical path exiting from said beam splitter,
wherein easy transmission axes of said first polarizing filter and said second polarizing filter are set to be perpendicular to each other.

8. The inspection lighting device according to claim 7, further comprising
a quarter-wave plate disposed on a side of said lens facing said object to be inspected.

9. The inspection lighting device according to any one of claims 1 to 8,
being a lighting optical system for irradiating said object to be inspected with the inspection light, incorporated in an imaging device that captures light reflected, transmitted, or scattered at said object to be inspected, or in an observation optical system of said imaging device.

10. An inspection system comprising the inspection lighting device according to any one of claims 1 to 8 and an imaging device that captures light reflected, transmitted, or scattered at said object to be inspected,
wherein, in the inspection light with which said inspection lighting device irradiates said object to be inspected, it is possible, based on a shape, a size, or an inclination of an observation solid angle of said imaging device at respective points of said object to be inspected, to set a shape, a size, or an inclination of the irradiation solid angle at respective points of said object to be inspected, or to set a shape, a size, or an inclination of said irradiation solid angle and said observation solid angle to be substantially the same relative to each other.
